# EUROPÄISCHE PATENTSCHRIFT

(11) **EP 2 292 389 B1**
(45) Veröffentlichungstag und Bekanntmachung des Hinweises auf die Patenterteilung: **03.10.2012**
(21) Anmeldenummer: 10183104.8
(22) Anmeldetag: 15.10.2007
(51) Int. Cl.: B26B 1/04, B26B 5/00, B26B 9/02, B26B 11/00, B26B 1/10, B23D 51/03, B25F 1/04, A62B 3/00, B25G 3/18, B26B 29/02

(54) **Taschenwerkzeug, insbesondere Taschenmesser**
Pocket tool, in particular pocket knife
Outil de poche, en particulier couteau de poche

(30) Priorität: 16.10.2006 AT 17222006; 17.10.2006 AT 17322006
(43) Veröffentlichungstag der Anmeldung: 09.03.2011
(62) Teilanmeldung aus: 07020156.1
(73) Patentinhaber: VICTORINOX AG, 6438 Ibach (CH)
(72) Erfinder: Elsener, Carl, 6438 Ibach (CH)
(74) Vertreter: Burger, Hannes

(56) Entgegenhaltungen:
- EP-A2- 1 500 474
- DE-C- 290 359
- US-A- 416 946
- US-A- 586 453
- US-A- 1 049 931
- US-A- 1 940 855
- US-A- 4 707 920
- US-A- 5 657 543
- US-B1- 6 453 564

## Beschreibung

Die Erfindung betrifft ein Taschenwerkzeug, wie im Oberbegriff des Anspruches 1 beschrieben.

Die EP 1 500 474 A2 offenbart ein modulartig aufgebautes Taschenwerkzeug, welches ein Grundelement und ein mit diesem lösbar verbindbares multifunktionales Zusatzelement umfasst, letzteres zumindest einen Aufnahmebereich und über je eine Schwenklagerung zwischen einer in den Aufnahmebereich eingeschwenkten Transportposition und einer aus dem Aufnahmebereich ausgeschwenkten Funktionsposition verstellbare Funktionsteile, wie Steckschlüssel, Sägeblatt, Gurtenschneider, Scheibenzertrümmerer und dgl., umfasst. Eine Trümmerspitze des Scheibenzertrümmerers ist an der Spitze des Sägeblattes und/oder an dem Gehäuse des Zusatzelementes angeordnet.

Ein Taschenwerkzeug ist auch aus der US 6, 453, 564 B1 bekannt, welches ein Gehäuse, eine an diesem schwenkbar gelagerte Kupplungsvorrichtung für ein Sägeblatt, einen vom Gehäuse entfernbaren Werkzeugbit, einen auswechselbaren Scheibenzertrümmerer sowie einen vom Gehäuse entfernbaren Gurtenschneider umfasst. Das Gehäuse ist mit koaxial gegenüberliegenden Aufnahmebohrungen ausgebildet, wobei eine erste Aufnahmebohrung als Steckaufnahme für den Werkzeugbit und eine zweite Aufnahmebohrung als Steckaufnahme für den Scheibenzertrümmerer dient. Der Scheibenzertrümmerer wird in seiner Aufnahmeposition am Gehäuse über eine zusätzliche Arretierschraube in der Aufnahmebohrung gehalten. Im Gehäuse sind ferner Aufnahmebereiche ausgebildet, wobei das Sägeblatt über die Kupplungsvorrichtung auswechselbar am Gehäuse gelagert ist.

Aus der US 6,675,419 B2 ist ein Taschenwerkzeug bekannt, das über ein Drehgelenk miteinander verbundene Griffe mit über Achsen verbundenen Seitenwänden und zwischen diesen angeordneten Aufnahmebereichen, und über Schwenklagerungen auf den Achsen zwischen einer in den Aufnahmebereich eingeschwenkten Transportposition und einer aus dem Aufnahmebereich ausgeschwenkten Funktionsposition verstellbar gelagerte Funktionsteile aufweist. Einer dieser Funktionsteile ist durch eine Pinzette gebildet, die über eine Kupplungsvorrichtung auswechselbar auf einer Achse angeordnet und gegen ein Federelement gelagert ist. Die Kupplungsvorrichtung weist Führungsarme und eine zwischen diesen ausgebildete Aussparung zur Aufnahme der Achse auf. Zum Auswechseln der Pinzette wird diese um 180° aus der Transportposition in eine, der Funktionsposition entsprechende Entkupplungsposition ausgeschwenkt, in welcher die Pinzette relativ zur Achse parallel zur Längserstreckung des Griffes so weit in den Aufnahmebereich verschoben werden kann, bis einer der Führungsarme von der Achse entkuppelt ist. Anstatt der Pinzette kann auch eine Messerklinge oder ein Sägeblatt mit einer Kupplungsvorrichtung ausgestattet werden. Somit liegt beim Auswechselvorgang eines Funktionsteiles die scharfkantige Schneide frei, sodass ein erhöhtes Verletzungsrisiko für den Benutzer besteht. Andererseits kann durch die fehlende Seitenführung des Funktionsteiles in der Entkupplungsposition eine Beschädigung des Funktionsteiles bei fehlerhafter Bedingung nicht ausgeschlossen werden.

Aus der AT 500 097 A1 ist ein Taschenwerkzeug bekannt, bei dem ein Elektronikmodul über eine Kupplungsvorrichtung auswechselbar auf einer Achse gelagert ist, welche einen Lagerteil und einen Arretierarm aufweist, der gegen die Achse gelagert ist und die Achse im Lagerteil hält. Sowohl beim Entkuppeln als auch beim Ankuppeln wird das Elektronikmodul soweit gegenüber dem Gehäuse verschwenkt, dass eine Längsachse des Elektronikmoduls in einem Winkel von 90° zur Längsachse des Gehäuses gerichtet ist.

Die US 1,940.855 A, US 416,946 A, DE 290 359 C, US 586,453 A, US 19,606 A und US 1,049,931 A zeigen Taschenwerkzeuge, bei denen ein Funktionsteil über eine Kupplungsvorrichtung auswechselbar auf einer Achse des Gehäuses gelagert und über eine Schwenklagerung zwischen einer in das Gehäuse eingeschwenkten Transportposition und einer aus dem Gehäuse ausgeschwenkten Funktionsposition verstellbar ist.

Der vorliegenden Erfindung liegt die Aufgabe zugrunde, ein Taschenwerkzeug mit auswechselbarem Scheibenzertrümmerer zu schaffen, der auch während seiner Benutzung zuverlässig in der Ankupplungsposition gehalten wird.

Diese Aufgabe der Erfindung wird durch die Merkmale des Anspruches 1 gelöst. In der Ankupplungsposition wird das Federelement am stirnseitigen Ende von der Verriegelungsnase formschlüssig hintergriffen und damit sichergestellt, dass bei der Benutzung des Scheibenzertrümmerers die Achse nicht aus dem Lagerteil herausgehoben und der Scheibenzertrümmerer von der Achse abgekuppelt wird. Zudem wird der Scheibenzertrümmerer in der Ankupplungsposition mit seinem Lagerteil unter der Wirkung der Federkraft auf der Achse zuverlässig eingerastet. Der Scheibenzertrümmerer kann außerdem durch die Kulissenführung mit niedrigem Kraftaufwand relativ zur Achse verschoben werden. Durch den komfortablen Auswechselvorgang mit vermindertem Kraftaufwand, besteht auch für den Benutzer nur wenig Risiko, sich dabei zu verletzen.

Gemäß den Ausgestaltungen nach den Ansprüchen 2 und 3 wird in vorteilhafter Weise die Ankupplungsbewegung des Scheibenzertrümmerers relativ zur Achse in eine Schwenkbewegung umgesetzt.

Vorteilhaft ist auch die Ausgestaltung nach Anspruch 4, da die Funktionsteile in der ausgeschwenkten Funktionsposition gegebenenfalls zusätzlich zu Federelementen mittels der einstückig aus der Trennwand ausgeformten Arretierzungen durch Formschluss mit der Schwenklagerung arretiert werden können und deshalb selbst bei hohen Kräften oder Momenten während der Benutzung, ein unerwünschtes Rückklappen der Funktionsteile in die Transportposition vermieden wird. Somit kann ein Funktionsteil erst nachdem die Arretierzunge den Funktionsteil freigibt, in die Transportposition kontrolliert zurück geschwenkt werden, sodass Verletzungen des Benutzers durch unvorhergesehenes Einklappen des Funktionsteiles zuverlässig vermieden werden.

Die Erfindung wird im Nachfolgenden anhand der in den Zeichnungen dargestellten Ausführungsbeispiele näher erläutert.

Es zeigen:
- Fig. 1: eine perspektivische Ansicht des erfindungsgemäßen Taschenwerkzeuges mit den in die Transportposition innerhalb der Aufnahmebereiche eingeschwenkten Funktionsteilen, in vereinfachter Darstellung;
- Fig. 2: das Taschenwerkzeug nach Fig. 1 mit den in die Funktionsposition außerhalb der Aufnahmebereiche ausgeschwenkten Funktionsteilen;
- Fig. 3: eine explosionsartige Darstellung des Taschenwerkzeuges nach Fig. 1;
- Fig. 4: einen in die Transportposition eingeschwenkten bzw. in der Ankupplungsposition befindlichen Funktionsteil und das mit diesem zusammenwirkende Federelement, in Seitenansicht;
- Fig. 5: das Federelement nach Fig. 4 in Seitenansicht;
- Fig. 6: der Funktionsteil nach Fig. 4 mit einer Detailansicht auf dessen Schwenklagerung und Kupplungsvorrichtung;
- Fig. 7: der Funktionsteil nach Fig. 4 in der bereichsweise aus dem Aufnahmebereich heraus geschwenkten Entkupplungsposition und das Federelement in Seitenansicht;
- Fig. 8: den Entkupplungsvorgang des Funktionsteiles von der Achse;
- Fig. 9: einen in die Funktionsposition ausgeschwenkten Funktionsteil und das mit diesem zusammenwirkende Federelement, in Seitenansicht;
- Fig. 10: den Ankupplungsvorgang des Funktionsteiles auf die Achse;
- Fig. 11: eine Seitenansicht auf den von der Achse entfernten Scheibenzertrümmerer und den eingeschwenkten Kapselheber sowie das mit diesen zusammenwirkende Federelement, in Seitenansicht;
- Fig. 12: den Scheibenzertrümmerer beim Ankupplungsvorgang, in Seitenansicht;
- Fig. 13: die Ankupplungsposition des Scheibenzertrümmerers auf der Achse, das Federelement und den Kapselheber, in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können.

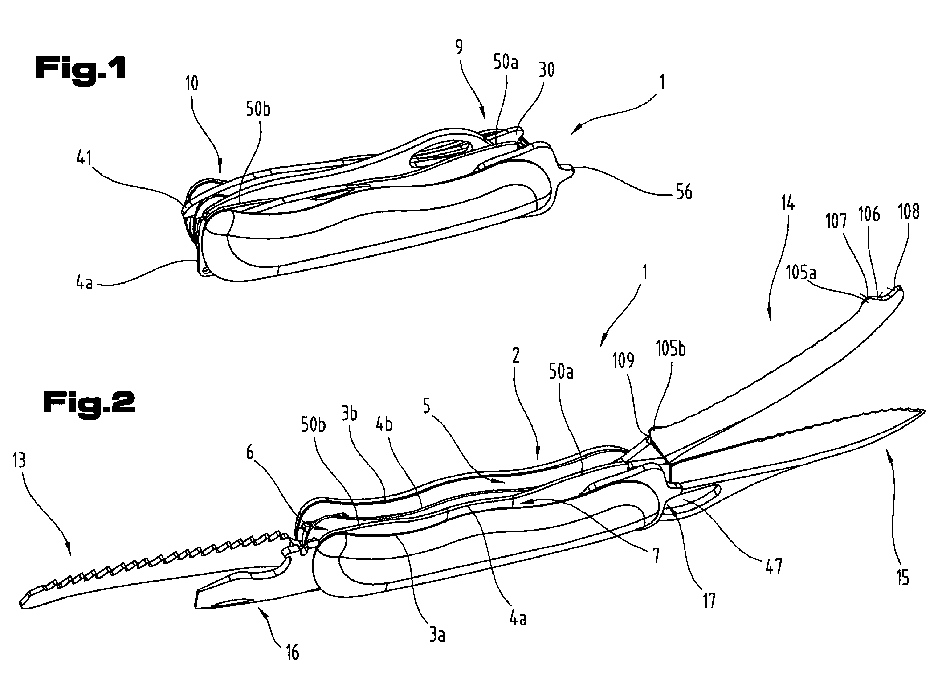

Die Fig. 1 bis 3 zeigen ein erfindungsgemäßes Taschenwerkzeug 1. Dieses ist gemäß dieser Ausführung durch ein Taschenmesser gebildet und umfasst ein Gehäuse 2, welches einander gegenüberliegende Seitenwände 3a, 3b, zwischen diesen angeordnete Trennwände 4a, 4b und durch diese in mehreren nebeneinander liegenden Ebenen zumindest bereichsweise begrenzte Aufnahmebereiche 5, 6, 7 aufweist. Die Seitenwände 3a, 3b sind auf ihrer Außenseiten jeweils mit einer Schale 8a, 8b bevorzugt aus Kunststoff abgedeckt. Die Seiten- und Trennwände 3a, 3b, 4a, 4b sind durch in Endbereichen 9, 10 des Gehäuses 2 angeordnete Achsen 11a, 11b und gegebenenfalls durch eine zwischen diesen angeordnete Achsen 12 miteinander verbunden und bilden dazwischen die Aufnahmebereiche 5, 6, 7 aus.

Wie aus den Fig. ersichtlich, umfasst das Taschenwerkzeug 1 unterschiedliche Funktionsteile 13 bis 17, wovon die Funktionsteile 13 bis 16 jeweils eine Schwenklagerung 18 bis 21 aufweisen, über welche jeder Funktionsteil 13 bis 16 zwischen einer in den Aufnahmebereich 5, 6, 7 eingeschwenkten Transportposition, wie in Fig. 1 dargestellt, und einer aus dem Aufnahmebereich 5, 6, 7 ausgeschwenkten Funktionsposition, wie in Fig. 2 dargestellt, verstellbar und auf den Achsen 11a, 11b gelagert ist. Wie im Nachfolgenden noch detailliert beschrieben wird, sind die Funktionsteile 13, 17 jeweils über eine Kupplungsvorrichtung 22, 23 auswechselbar auf der Achse 11a, 11b gelagert. Damit verbunden ist der Vorteil, dass diese Funktionsteile 13, 17 einerseits durch Funktionsteile anderer Funktion oder nach Verschleißerscheinungen durch neue Funktionsteile ausgetauscht werden können.

Das in den Fig. dargestellte Taschenwerkzeug 1 dient vornehmlich zur Bergung von Menschen aus einem Kraftfahrzeug nach einem Unfall und sind dementsprechend die Funktionsteile 13 bis 17 zu diesem Zweck ausgebildet.

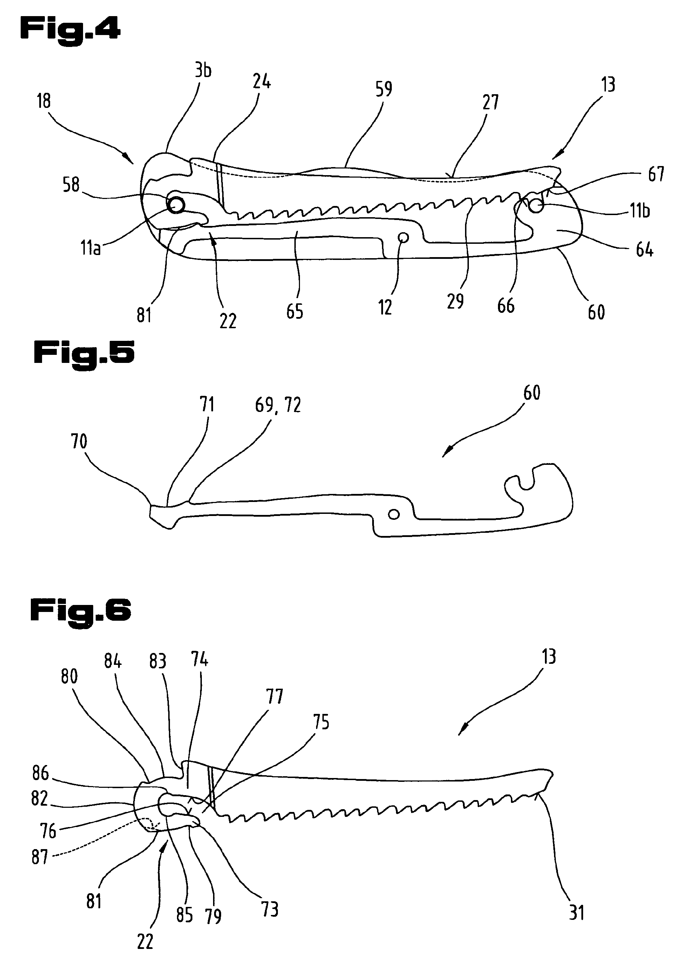

Der Funktionsteil 13 ist durch ein Trennwerkzeug gebildet und umfasst ein Sägeblatt 24, mit dem Verbundglas, beispielsweise eine Seitenscheibe des Kraftfahrzeuges geschnitten werden kann, um den Zugang zum Verletzten zu ermöglichen. Das Trennwerkzeug weist die Schwenklagerung 18, eine von dieser bis zu einer Spitze 25 erstreckende Unter- und Oberkante 26, 27 sowie sich zwischen diesen erstreckende Seitenflächen 28 auf und bildet an der Unterkante 26 eine Vielzahl von hintereinander angeordneten Schneiden 29 bzw. Sägezähne aus. Die Unter-und Oberkante 26, 27 verjüngen sich mit zunehmendem Abstand von der Schwenklagerung 18 in Richtung der Spitze 25 und ist zumindest die Oberkante 27 konkav ausgebildet. Das Sägeblatt 24 ist an seiner Spitze 25 mit einem in der eingeschwenkten Transportposition aus der Außenkontur des Gehäuses 2 herausragenden Griffelement 30 und mit einer in Fig. 6 eingetragenen Führungs- und Anschlagfläche 31 versehen. Letztere erstreckt sich an der Unterkante 26 zwischen der vordersten Schneide 29 und dem Griffelement 30. Die die Kupplungsvorrichtung 22 aufweisende Schwenklagerung 18 wird anhand der Fig. 4 bis 10 noch genauer beschrieben.

Der Funktionsteil 14 ist durch einen Gurtenschneider 35 zum Durchtrennen eines Sicherheitsgurtes gebildet, welcher die Schwenklagerung 19 und von dieser bis zu einer Spitze 36 annähernd parallel zueinander verlaufende Unter- und Oberkanten 37, 38 sowie sich zwischen diesen erstreckende kongruente Seitenflächen 39 aufweist. Im Übergangsbereich zwischen einer Seitenfläche 39 und der Unterkante 37 ist eine konkave Schneide 40 in Form eines Wellenschliffes ausgebildet. An der Spitze 36 ist wiederum ein in der Transportposition des Funktionsteiles 14 aus der Außenkontur des Gehäuses 2 herausragendes Griffelement 41 vorgesehen. Das Griffelement 41 ragt soweit aus der Außenkontur heraus, dass auch ein Verschwenken des Funktionsteiles 14 in die Funktionsposition mit einem anderen Körperteil als mit den Fingerspitzen, beispielsweise mit dem Knie möglich ist, womit eine Einhandbedienung beim Verschwenken des Funktionsteiles 14 in die Transportposition als auch Funktionsposition möglich ist. Zumindest die Oberkante 38 ist konvex ausgebildet, um sicherzustellen, dass der Gurtenschneider 35 ohne Verletzung der Person auch unterhalb eines straff angezogenen Sicherheitsgurtes eingeschoben werden kann. Nach gezeigter Ausführung ist auch die Unterkante 37 konkav ausgebildet.

Der Funktionsteil 14 umfasst außerdem einerseits zwischen der Spitze 36 und der Schneide 40 und andererseits zwischen der Schwenklagerung 19 und der Schneide 40 im Bereich der Unterkante 37 einen an der Schneide 40 vorragenden, vorderen Nocken 105a und einen an der Schneide 40 vorragenden, hinteren Nocken 105b. Der vordere Nocken 105a bildet eine von der Unterkante 37 in Richtung der Oberkante 38 geneigt verlaufende Abweiserfläche 106 und eine Führungsfläche 107 aus. Letztere schließt an die Schneide 40 an. Zwischen der Spitze 36 und dem Nocken 105a erstreckt sich eine Auflagefläche 108, wobei die Abweiserfläche 106 und Auflagefläche 108 einen Winkel zwischen 90° und 130°, beispielsweise 110°, einschließen und im Übergangsbereich zwischen der Abweiser- und Auflagefläche 106, 108 eine Verrundung beispielsweise mit einem Radius zwischen 2 mm und 6 mm ausgebildet ist. Die Auflagefläche 108 und eine Längsachse 68 vom Gehäuse 2 schließen einen Winkel zwischen 10° und 30°, beispielsweise 15°, ein, wenn der Funktionsteil 14 in seine Funktionsposition ausgeschwenkt ist.

Soll nun ein Gegenstand, insbesondere ein Sicherheitsgurt, durchschnitten werden, wird die Spitze 36 unterhalb des zu durchschneidender Gegenstandes eingeschoben und dabei der Gegenstand auf die Auflagefläche 108 geführt und danach über die Abweiserfläche 106 bis zur Führungsfläche 107 angehoben, von der er auf die Schneide 40 abgleitet und durchgeschnitten wird.

Somit erfüllt der vordere Nocken 105a eine Führungsfunktion für den Gegenstand, wenn dieser durchgeschnitten werden soll und kann beispielsweise auch ein straff angezogener Sicherheitsgurt durchgeschnitten werden, ohne der Person eine Verletzung hinzuzufügen.

Der hintere Nocken 105b bildet eine sich von der Unterkante 37 in Richtung der Oberkante 38 bevorzugt geneigt verlaufende Abstützfläche bzw. Grifffläche 109 aus, die den Benutzer des Taschenwerkzeuges 1 vor Verletzungen, insbesondere Schnittverletzungen schützt, wenn er beim Gebrauch des Funktionsteiles 14 versehentlich von dem als Heft dienenden Gehäuse 2 abrutscht. Ferner ermöglicht die Grifffläche 109 die Abstützung einer Fingerspitze beim Gebrauch des Funktionsteiles 14. Zudem dienen die stumpfen Nocken 105a, 105b als Schutz der zwischen diesen sich erstreckenden Schneide 40.

Der Funktionsteil 15 ist durch eine Messerklinge 42 (Trennwerkzeug) gebildet, welche die Schwenklagerung 20 und von dieser bis zu einer Spitze aufeinander zulaufende Unter- und Oberkanten 43, 44 sowie sich zwischen diesen erstreckende kongruente Seitenflächen 45 aufweist. Im Übergangsbereich zwischen einer Seitenfläche 45 und der Unterkante 43 ist eine Schneide 46 in Form eines Wellenschliffes ausgebildet. Die Messerklinge 42 ist an ihrer Oberkante 44 im Übergangsbereich zur Schwenklagerung 20 mit einer die Klingenkontur überragenden, augenartigen Grifföffnung 47 versehen. Die Grifföffnung 47 ist in den Abmessungen dergestalt ausgebildet, dass einerseits durch die besonders gute Griffigkeit die Messerklinge 42 alleinig mit dem Daumen aus der Transportposition in die Funktionsposition ausgeschwenkt werden kann oder umgekehrt und andererseits auch mit einem dicken Handschuh die Bedienung der Messerklinge 42 möglich ist. Auf diese Weise ist eine Einhandbedienung möglich.

Der Funktionsteil 16 weist die Schwenklagerung 21, einen Schraubendreher 48 und einen Kapselheber 49 auf.

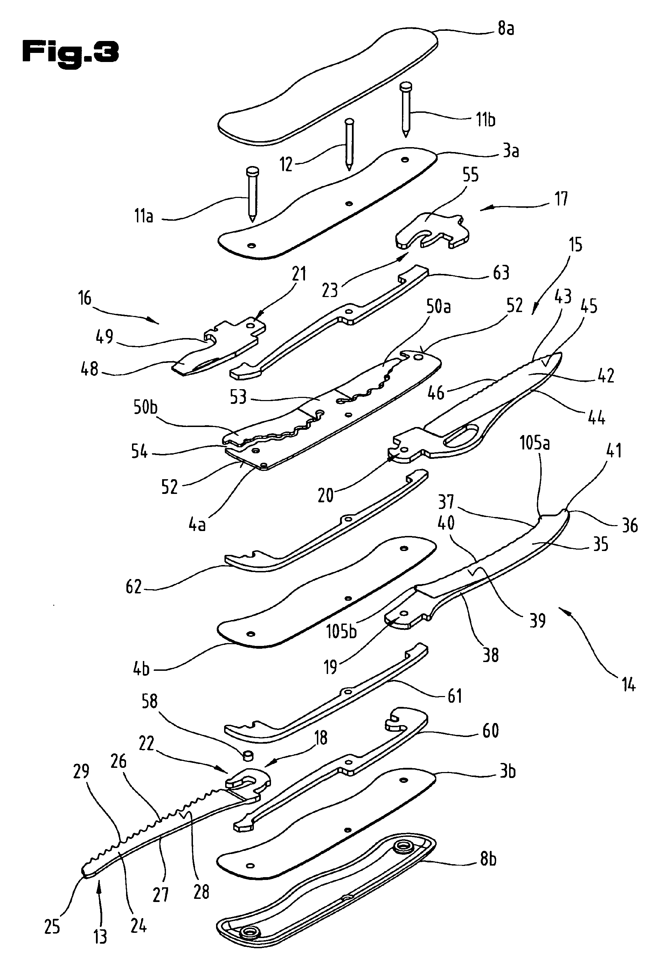

Wie aus den Fig. 1 und 3 ersichtlich, weist das Gehäuse 2 zusätzlich im Endbereich 9 eine der Schwenklagerung 20 der Messerklinge 42 zugeordnete Arretierzunge 50a zur Verriegelung und Entriegelung der Messerklinge 42 in der Funktionsposition und im Endbereich 10 eine der Schwenklagerung 18 des Sägeblattes 24 zugeordnete Arretierzunge 50b zur Verriegelung und Entriegelung des Sägeblattes 24 in der Funktionsposition auf.

Eine besonders kompakte Bauweise des Taschenwerkzeuges 1 wird erreicht, wenn die Arretierzungen 50a, 50b einstückig mit der zwischen dem Sägeblatt 24 und der Messerklinge 42 angeordneten Trennwand 4a durch Stanzen und Umformen hergestellt sind. Die Arretierzungen 50a, 50b sind aus der Ebene der Trennwand 4a in entgegen gesetzter Richtung abgewinkelt, sodass die Arretierzunge 50a, 50b selbsttätig aus der Entriegelungsstellung, siehe Fig. 1, in die Verriegelungsstellung, siehe Fig. 2, bewegt wird, wenn das Sägeblatt 24 oder die Messerklinge 42 in die Funktionsposition bewegt wurde. Wird eine Arretierzunge 50a, 50b aus der ausgelenkten Verriegelungsstellung entgegen der Wirkung der Federkraft in annähernd senkrechter Richtung auf die Trennwand 4a mit einer Entriegelungskraft beaufschlagt, wird diese in die Entriegelungsstellung seitlich neben das Sägeblatt 24 oder die Messerklinge 42 bewegt, worauf das Sägeblatt 24 oder die Messerklinge 42 aus der Funktionsposition in die Transportposition eingeschenkt werden kann. Die Trennwand 4a weist hierzu von entgegen gesetzten Stirnseitenflächen 52 aufeinander zulaufende, durch einen Quersteg 53 an deren auslaufenden Enden mit Abstand angeordnete, wellenförmige Trennfugen 54 auf.

Der weitere Funktionsteil 17 ist durch einen über die Kupplungsvorrichtung 23 auswechselbar auf der Achse 11b angeordneten Scheibenzertrümmerer 55 bzw. ein Trennwerkzeug gebildet, der eine Körnerspitze 56 zum Einschlagen einer Glasscheibe aufweist.

Die oben beschriebenen Funktionsteile 13 bis 17 sind jeweils mit der Schwenklagerung 18 bis 21 gegen ein in den entsprechenden Aufnahmebereich 5, 6, 7 vorragendes Federelement 60 bis 63 gelagert und federbelastet aus der in Fig. 1 gezeigten Transportposition um 180° in die in Fig. 2 gezeigte Funktionsposition ausschwenkbar.

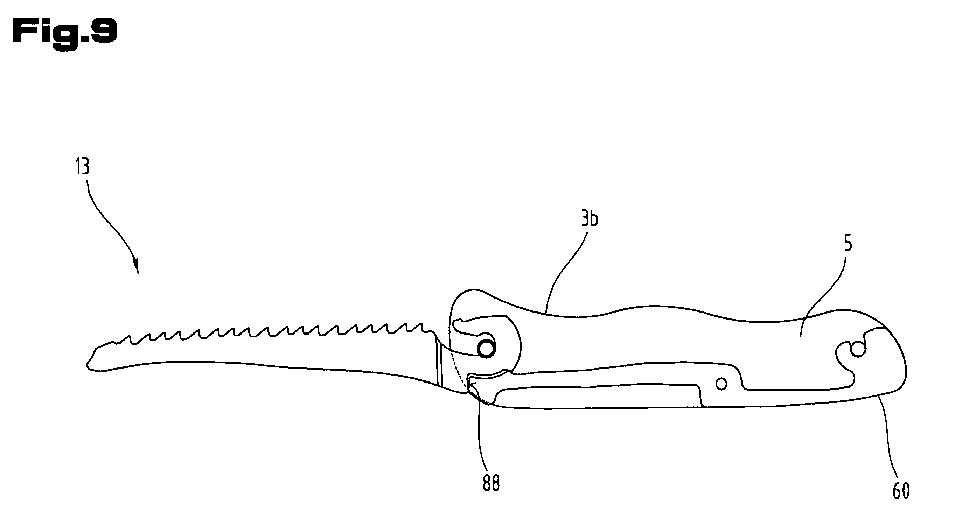

Die gemeinsam beschriebenen Fig. 4 bis 8 zeigen den Entkupplungsvorgang des Funktionsteiles 13 von der Achse 11a und Detailansichten auf den Funktionsteiles 13 und das Federelement 60. Das Trennwerkzeug ist mit seiner Schwenklagerung 18 gegen das Federelement 60 verschwenkbar gelagert, sodass sowohl in der eingeschwenkten Transportposition (Fig. 4) als auch in der ausgeschwenkten Funktionsposition (Fig. 9) eine Haltekraft wirkt. Um auch bei häufiger Anzahl an Wechselvorgängen eine Abnutzung an der Achse 11a zu vermeiden, kann auf dieser eine Lagerbuchse 58 angeordnet sein, an der das Trennwerkzeug mit seiner Schwenklagerung 18, insbesondere einem Lagerteil gelagert ist. Das Federelement 60 ist hebelgelagert und weist einen gegen die Achse 11b gelagerten Stützkörper 64 und einen an diesem vorspringenden und um die Achse 12 drehbar gelagerten, biegeelastischen Federarm 65 auf. Der Stützkörper 64 bildet an seiner dem eingeschwenkten Trennwerkzeug zugewandten Oberseite eine(n) zur Führungs- und Anschlagfläche 31 komplementäre(n) Führungsfläche 66 und Ruheanschlag 67 aus, die in einer Ebene liegen und mit einer Längsachse 68 des Gehäuses 2 einen Winkel von kleiner 30°, insbesondere zwischen 10° und 20° einschließen.

Wie in den Fig. dargestellt, sind die Seitenwände 3a, 3b jeweils an ihrer Oberseite mit aus der Außenkontur des in die Transportposition verstellten Funktionsteiles 13 herausragenden und um die Längsachse 68 symmetrisch angeordnete konvexe Griffnocken 59 versehen, deren Höhe und Breite so bemessen ist, dass in der Entkupplungsposition eine Teillänge der Unterkante 26 mit den Schneiden 29 von den Seitenwänden 3a, 3b seitlich überdeckt ist.

Das Federelement 60 bzw. der Federarm 65 ist an seinem freien Ende mit einem Rastnocken 69, Stütznocken 70 und einer sich zwischen diesen in Längsrichtung des Federelementes 60 erstreckenden, konkaven Führungskulisse 71 versehen, wie in Fig. 5 eingetragen. Der Rastnocken 69 bildet ein Rastelement 72 aus.

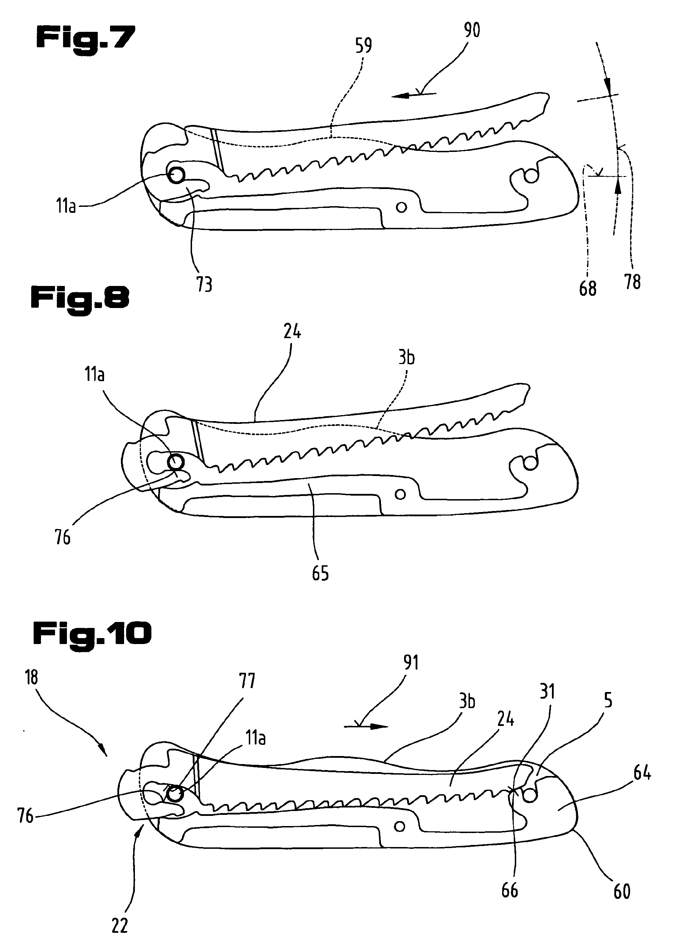

Wie in Fig. 6 gezeigt, weist die Kupplungsvorrichtung 22 Führungsarme 73, 74 und eine zwischen diesen ausgebildete Aussparung 75 zur Aufnahme der Achse 11a mit Lagerbuchse 58 auf. Die Führungsarme 73, 74 bilden auf deren einander zugewandten Seiten jeweils eine Kulissenbahn 76, 77 aus, wobei in der Transportposition des Trennwerkzeuges die ebene Kulissenbahn 76 mit der Längsachse 68 des Taschenwerkzeuges 1 einen derartigen Winkel einschließt, dass das Trennwerkzeug in seiner in Fig. 7 gezeigten Entkupplungsposition zwischen der eingeschwenkten Transportposition und der ausgeschwenkten Funktionsposition geschwenkt ist und in einem Winkel 78 von kleiner 30°, insbesondere zwischen 7° und 15° zur Längsachse 68 von der Achse 11a abgekuppelt werden kann, wie in den Fig. 7 und Fig. 8 dargestellt. Somit schließt eine Längsachse des Funktionsteiles 13 und die Kulissenbahn 76 einen Winkel von kleiner 30°, insbesondere zwischen 7° und 15°, ein, wenn der Funktionsteil 13 in die Transportposition geschwenkt ist.

Die plattenförmige Schwenklagerung 18 weist am Außenumfang in Schwenkrichtung etwa um 180° versetzt angeordnete Rastelemente 79, 80 auf, in die entweder in der Ankupplungsposition (Fig.4) oder in der Transport- und Funktionsposition des Sägeblattes 24 der am Federelement 60 angeordnete Rastnocken 69 einrastet. Dadurch werden die Haltekräfte sowohl in der Transportposition als auch in der Funktionsposition erheblich verbessert. Zwischen den Rastelemente 79, 80 erstrecken sich ein erster und zweiter Führungsbahnteil 81, 82, wobei der vom Führungsarm 73 abgewandte Führungsbahnteil 81 auf dem Stütznocken 70 ruht, wenn das Sägeblatt 24 in die Transport- bzw. Ankupplungsposition bewegt ist. Das Rastelement 79 ist durch eine im ersten Führungsbahnteil 81 angeordnete Rastvertiefung gebildet.

Die Schwenklagerung 18 weist ferner am Außenumfang in Schwenkrichtung eine Schulter 83, einen sich ausgehend vom Rastelement 80 bis zur Schulter 83 erstreckenden und vom Führungsarm 74 abgewandten, dritten Führungsbahnteil 84 sowie am Ende der Aussparung 75 übereinander angeordnete Lagerteile 85, 86 auf. Das Rastelement 80 ist durch eine im dritten Führungsbahnteil 84 angeordnete Rastvertiefung gebildet.

Wie in Fig. 6 in strichlierte Linien eingetragen, kann die Schwenklagerung 18 im Übergangsbereich zwischen den Führungsbahnteilen 81, 82 auch mit einer Abflachung 87 versehen werden, die annähernd planparallel zur ersten Kulissenbahn 76 verläuft und es ermöglicht, dass das Sägeblatt 24 in der Entkupplungsposition mit der Abflachung 87 gegen den Stütznocken 70 anliegt und im Winkel 78 relativ zum Gehäuse 2 gehalten wird.

In der Transport- bzw. Ankupplungsposition (Fig. 4) ruht das Sägeblatt 24 mit seinem ersten Führungsbahnteil 81 an der Schwenklagerung 18 auf dem Stütznocken 71 an dem Federelement 60 und sind die Rastelemente 72, 79 des Federelementes 60 und der Schwenklagerung 18 miteinander eingerastet. Somit ergibt sich in Abhängigkeit von der Größe des Stütznockens 70 und der Federkraft eine entsprechende Haltekraft in der Transport- bzw. Ankupplungsposition. Wird nun das Sägeblatt 24 ergriffen und durch Kraftaufwand die Haltekraft überwunden, sodass der Rastnocken 69 aus der Rastvertiefung herausgehoben wird, läuft der Führungsbahnteil 82 am äußeren Ende der Schwenklagerung 18 durch die Führungskulisse 71. Diese Kulissenführung bewirkt eine saubere Ausschwenkbewegung des Sägeblattes 24 gegenüber dem Federelement 60. Schließlich gelangt das Rastelement 80 an der Schwenklagerung 18 zum Rastnocken 69 des Federelementes 60, wo dieses einrastet und das Sägeblatt 24 über die Schulter 83 gegen die Stirnseite 88 des Federelementes 60 anliegt. In dieser ausgeschwenkten Position ist die Funktionsposition (Fig. 9) erreicht, in welcher das Sägeblatt 24 mit entsprechender Haltekraft des Federelementes 60 arretiert ist und ein unbeabsichtigtes Rückklappen bei der Benutzung weitestgehend ausgeschlossen werden kann.

In der Entkupplungsposition (Fig. 7) verlaufen eine Führungsebene der ersten Kulissenbahn 76 und die Längsachse 68 annähernd parallel zueinander und sind die Rastelemente 72, 79 außer Eingriff gebracht, sodass das Sägeblatt 24 entgegen der Wirkung der Federkraft in Richtung einer Ausschubachse - gemäß Pfeil 90 - relativ zur Achse 11a verschoben werden kann und die Achse 11a den Führungsarm 73 freigibt. In vorteilhafter Weise wird auf der Entkupplungsbewegung in Richtung der Ausschubachse 90 das Sägeblatt 24 einerseits mit seiner ersten Kulissenbahn 76 an der Achse 11a vertikal und andererseits durch das Gehäuse 2, insbesondere an der Seitenwand 3b und/oder das Federelement 60 und/oder an einer Seitenflächen 39 des Gurtenschneiders 35 seitlich geführt.

Fig. 10 zeigt den Ankupplungsvorgang des Sägeblattes 24 über die Kupplungsvorrichtung 22 an der Achse 11a. Ebenso wie der Entkupplungsvorgang kann auch der Ankupplungsvorgang unter höchsten Sicherheitsbestimmungen erfolgen. Beim Ankuppeln des Sägeblattes 24 wird dieses annähernd parallel zur Längsachse 68 des Gehäuses 2 gehalten und entlang des Aufnahmebereiches 5 in Richtung einer Einsschubachse - gemäß Pfeil 91 - relativ zur Achse 11a in die Ankupplungsposition verschoben, in welcher die Achse 11a am Lagerteil 85 und die Rastelemente 79, 80 einrastet.

Auf der Ankupplungsbewegung des Sägeblattes 24 in die Ankupplungsposition wird die Führungsfläche 31 an der Führungsfläche 66 am Federelement 60 gleitend aufgesetzt und wird die Achse 11a entlang der bogenförmigen, zweiten Kulissenbahn 77 sowie die Schwenklagerung 18 entgegen der Federkraft vom Federelement 60 bis zu den Lagerteilen 85, 86 bewegt, wo durch die Federkraft die Schwenklagerung 18 mit seinem dem Federelement 60 benachbarten Lagerteil 85 an der Achse 11a einrastet.

Wie in den Fig. ersichtlich, ist sowohl in der Entkupplungsposition als auch Ankupplungsposition eine Öffnungsseite der Aussparung 75 dem Aufnahmebereich 5 zugewandt.

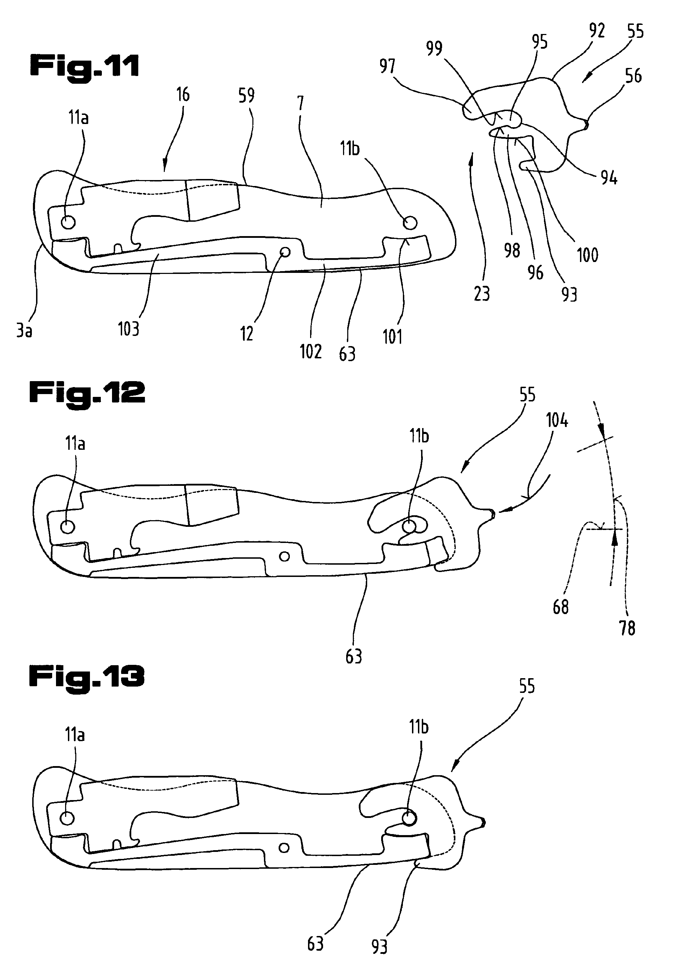

In den gemeinsam beschriebenen Fig. 11 bis 13 ist der Auswechselvorgang des über die Kupplungsvorrichtung 23 auswechselbar auf der Achse 11b gelagerten Scheibenzertrümmerers 55 in aufeinander folgenden Schritten gezeigt. Der Scheibenzertrümmerer 55 umfasst einen plattenförmigen Grundkörper 92, die an diesem angeordnete Körnerspitze 56 und auf der dieser gegenüber liegenden Seite die Kupplungsvorrichtung 23, eine Verriegelungsnase 93 sowie einen Lagerteil 94. Die Kupplungsvorrichtung 23 ihrerseits umfasst über eine Aussparung 95 zur Aufnahme der Achse 11b voneinander getrennt angeordnete Führungsarme 96, 97. Der dem Federelement 63 benachbarte Führungsarm 96 und der diesem gegenüber liegende Führungsarm 97 weisen auf ihren einander zugewandten Seiten jeweils eine abschnittsweise ebene Kulissenbahn 98, 99 auf. Der erste Führungsarm 96 ist zusätzlich, auf der dem Federelement 63 zugewandten Seite mit einer bogenförmigen, dritten Kulissenbahn 100 versehen, die komplementär zu einer Führungsbahn 101 am Federelement 63 ausgebildet ist.

Das Federelement 63 weist um die Achse 12 drehbar gelagerte Federarme 102, 103 auf, wovon der erste Federarm 102 dem Scheibenzertrümmerer 55 und der zweite Federarm 103 dem Funktionsteil 16 zugeordnet und gegen die einerseits der Funktionsteil 16 und andererseits der Scheibenzertrümmerer 55 verschwenkbar gelagert sind, wobei der Funktionsteil 16 sowohl in der eingeschwenkten Transportposition als auch in der ausgeschwenkten Funktionsposition durch eine Haltekraft arretiert ist.

Soll nun der Scheibenzertrümmerer 55 an der Achse 11b angekuppelt werden, wird er vorerst so relativ zum Gehäuse 2 positioniert, dass die Achse 11b in die Aussparung 95 eingreifen kann. Auf der Ankupplungsbewegung wird der Führungsarm 96 entgegen der Wirkung der Federkraft des Federelementes 63 um die Achse 11b nach unten verschwenkt, wie durch den Pfeil 104 in Fig. 12 angedeutet. Dabei gleitet die Kulissenbahn 100 an der Führungskulisse 101 und wird der Scheibenzertrümmerer 55 entgegen der Federkraft vom Federelement 63 bis zum Lagerteil 94 bewegt, wo die Achse 11b im Lagerteil 94 einrastet und die Ankupplungsposition (Fig. 13) erreicht ist. In der Ankupplungsposition ruht der Führungsarm 96 auf der Führungskulisse 101 des Federelementes 63 und wirkt eine entsprechende Haltekraft des Federelementes 63 auf den Scheibenzertrümmerer 55.

Die Kulissenbahn 98 und/oder 99 schließen mit der Längsachse 68 des Taschenwerkzeuges 1 einen derartigen Winkel ein, dass der Scheibenzertrümmerer 55 in einem Winkel 78 von kleiner 30°, insbesondere zwischen 7° und 15° zur Längsachse 68 an der Achse 11b angekuppelt werden kann, wie in den Fig. 12 und Fig. 13 dargestellt. Somit schließt eine Längsachse des Funktionsteiles 17 und die Kulissenbahn 98; 99 einen Winkel von kleiner 30°, insbesondere zwischen 7° und 15°, ein, wenn der Funktionsteil 17 angekuppelt ist.

Beim Entkupplungsvorgang wird der Scheibenzertrümmerer 55 ergriffen und durch Kraftaufwand die Haltekraft überwunden, sodass die Achse 11b aus dem Lagerteil 94 herausgehoben und entlang der Kulissenbahnen 98, 99 herausbewegt wird.

Wie in Fig. 13 ersichtlich, wird das Federelement 63 am stirnseitigen Ende von der Verriegelungsnase 93 hintergriffen, sodass durch den Formschluss zwischen dem Scheibenzertrümmerer 55 und dem Federelement 63 bei der Benutzung vermieden werden kann, dass die Achse 11b versehentlich aus dem Lagerteil 94 herausgehoben und der Scheibenzertrümmerer 55 von der Achse 11b abgekuppelt wird.

Abschließend sei noch drauf hingewiesen, dass auch der Gurtenschneider 35 oder die Messerklinge 42 mit einer Kupplungsvorrichtung versehen sein können.

Der Ordnung halber sei abschließend darauf hingewiesen, dass zum besseren Verständnis des Aufbaus des Taschenwerkzeuges 1, dieses bzw. dessen Bestandteile teilweise unmaßstäblich und/oder vergrößert und/oder verkleinert dargestellt wurden.

Vor allem können die einzelnen in den Fig. 1 bis 13 gezeigten Ausführungen den Gegenstand von eigenständigen Lösungen bilden.

### Bezugszeichenaufstellung

- 1: Taschenwerkzeug
- 2: Gehäuse
- 3a: Seitenwand
- 3b: Seitenwand
- 4a: Trennwand
- 4b: Trennwand
- 5: Aufnahmebereich

- 6: Aufnahmebereich
- 7: Aufnahmebereich
- 8a: Schale
- 8b: Schale
- 9: Endbereich
- 10: Endbereich

- 11a: Achse
- 11b: Achse
- 12: Achse
- 13: Funktionsteil
- 14: Funktionsteil
- 15: Funktionsteil

- 16: Funktionsteil
- 17: Funktionsteil
- 18: Schwenklagerung
- 19: Schwenklagerung
- 20: Schwenklagerung

- 21: Schwenklagerung
- 22: Kupplungsvorrichtung
- 23: Kupplungsvorrichtung
- 24: Sägeblatt
- 25: Spitze

- 26: Unterkante
- 27: Oberkante
- 28: Seitenfläche
- 29: Schneide
- 30: Griffelement

- 31: Führungs- und Anschlagfläche
- 35: Gurtenschneider

- 36: Spitze
- 37: Unterkante
- 38: Oberkante
- 39: Seitenfläche
- 40: Schneide

- 41: Griffelement
- 42: Messerklinge
- 43: Unterkante
- 44: Oberkante
- 45: Seitenfläche

- 46: Schneide
- 47: Grifföffnung
- 48: Schraubendreher
- 49: Kapselheber
- 50a: Arretierzunge
- 50b: Arretierzunge

- 52: Stirnseitenfläche
- 53: Quersteg
- 54: Trennfuge
- 55: Scheibenzertrümmerer

- 56: Körnerspitze
- 58: Lagerbuchse
- 59: Griffnocke
- 60: Federelement

- 61: Federelement
- 62: Federelement
- 63: Federelement
- 64: Stützkörper
- 65: Federarm

- 66: Führungsfläche
- 67: Ruheanschlag
- 68: Längsachse
- 69: Rastnocken
- 70: Stütznocken

- 71: Führungskulisse
- 72: Rastelement
- 73: Führungsarm
- 74: Führungsarm
- 75: Aussparung

- 76: Kulissenbahn
- 77: Kulissenbahn
- 78: Winkel
- 79: Rastelement
- 80: Rastelement

- 81: Führungsbahnteil
- 82: Führungsbahnteil
- 83: Schulter
- 84: Führungsbahnteil
- 85: Lagerteil

- 86: Lagerteil
- 87: Abflachung
- 88: Stirnseite
- 90: Ausschubachse

- 91: Einschubachse
- 92: Grundkörper
- 93: Verriegelungsnase
- 94: Lagerteil
- 95: Aussparung

- 96: Führungsarm
- 97: Führungsarm
- 98: Kulissenbahn
- 99: Kulissenbahn
- 100: Kulissenbahn

- 101: Führungskulisse
- 102: Federarm
- 103: Federarm
- 104: Pfeil
- 105: Nocken

- 106: Abweiserfläche
- 107: Führungsfläche
- 108: Auflagefläche
- 109: Grifffläche

## Patentansprüche

1. Taschenwerkzeug (1) mit einem Gehäuse (2), zumindest einem Aufnahmebereich (5, 6, 7), Achsen (11a, 11b) sowie einem auf einer der Achsen (11a, 11b) gelagerten Scheibenzertrümmerer (55) mit einer Körnerspitze (56), **dadurch gekennzeichnet, dass** der Scheibenzertrümmerer (55) einen plattenförmigen Grundkörper (92), eine Kupplungsvorrichtung (23), eine Verriegelungsnase (93) und einen Lagerteil (94) umfasst und welcher über die Kupplungsvorrichtung (23) auswechselbar auf einer der Achsen (11b) angeordnet ist, wobei die Kupplungsvorrichtung (23) auf einer der Körnerspitze (56) gegenüberliegenden Seite angeordnet ist, und zumindest eine den Scheibenzertrümmerer (55) auf seiner Ankupplungsbewegung in einem Winkel (78) von kleiner 30° zu einer Längsachse (68) des Gehäuses (2) bewegende Kulissenbahn (98, 99, 100) aufweist, und wobei der Scheibenzertrümmerer (55) in seiner Ankupplungsposition auf der Achse (11a, 11b) gegen ein Federelement (63) gelagert ist und die Verriegelungsnase (93) ein stirnseitiges Ende des Federelementes (63) hintergreift und die Achse (11b) mit dem Lagerteil (94) eingreift.

2. Taschenwerkzeug nach Anspruch 1, **dadurch gekennzeichnet, dass** die Kupplungsvorrichtung (23) Führungsarme (96, 97) und eine zwischen diesen ausgebildete Aussparung (95) zur Aufnahme der Achse (11a, 11b) aufweist, wobei der erste Führungsarm (96) auf der dem zweiten Führungsarm (97) zugewandten Seite mit der ersten Kulissenbahn (98) versehen ist.

3. Taschenwerkzeug nach Anspruch 2, **dadurch gekennzeichnet, dass** der zweite Führungsarm (97) auf der dem ersten Führungsarm (96) zugewandten Seite mit einer zweiten Kulissenbahn (99) und auf der dem ersten Führungsarm (96) abgewandten Seite mit einer dritten Kulissenbahn (100) versehen ist, welche dritte Kulissenbahn (100) eine konvex verlaufende Führungsfläche ausbildet.

4. Taschenwerkzeug nach Anspruch 1, **dadurch gekennzeichnet, dass** das Gehäuse (2) in den gegenüberliegenden Endbereichen (9, 10) jeweils eine Achse (11a, 11b) aufweist und dass ein zweiter Funktionsteil (15) über eine Schwenklagerung (20) zwischen einer in einen zweiten Aufnahmebereich (6) eingeschwenkten Transportposition und einer aus dem Aufnahmebereich (6) ausgeschwenkten Funktionsposition verstellbar auf der ersten Achse (11a, 11b) und ein dritter Funktionsteil (16) über eine Schwenklagerung (21) zwischen einer in einen dritten Aufnahmebereich (7) eingeschwenkten Transportposition und einer aus dem Aufnahmebereich (7) ausgeschwenkten Funktionsposition verstellbar auf der zweiten Achse (11a, 11b) angeordnet sind, wobei zwischen den Aufnahmebereichen (6, 7) eine Trennwand (4a) vorgesehen ist, die aus deren Ebene in entgegen gesetzte Richtungen vorragende Arretierzungen (50a, 50b) zur Verriegelung und Entriegelung der Funktionsteile (15, 16) jeweils in deren Funktionsposition ausbildet.

## Claims

1. Pocket tool (1) with a housing (2), at least one compartment region (5, 6, 7), pins (11a, 11b) and a glass-shattering tool (55) with a centre tip (56) mounted on one of the pins (11a, 11b), **characterised in that** the glass-shattering tool (55) comprises a plate-shaped main body (92), a coupling device (23), a locking lug (93) and a bearing part (94) and is interchangeably mounted on one of the pins (11b) by means of the coupling device (23), and the coupling device (23) is disposed on a side lying opposite the centre tip (56) and has at least one guide track (98, 99, 100) configured to guide the glass-shattering tool (55) on its coupling movement at an angle (78) of less than 30° with respect to a longitudinal axis (68) of the housing (2), and the glass-shattering tool (55) is mounted on the pin (11a, 11b) against a spring element (63) in its coupling position and the locking lug (93) locates behind a terminal end of the spring element (63) and the pin (11b) locates with the bearing part (94).

2. Pocket tool as claimed in claim 1, **characterised in that** the coupling device (23) has guide arms (96, 97) and a recess (95) between the latter for accommodating the pin (11a, 11b), and the first guide arm (96) is disposed on the side incorporating the first guide track (98) facing the second guide arm (97).

3. Pocket tool as claimed in claim 2, **characterised in that** the second guide arm (97) is disposed on the side incorporating a second guide track (99) facing the first guide arm (96) and on the side incorporating a third guide track (100) remote from the first guide arm (96), which third guide track (100) is designed with a convexly extending guide surface.

4. Pocket tool as claimed in claim 1, **characterised in that** the housing (2) has a pin respectively (11a, 11b) in the oppositely lying end regions (9, 10), and a second implement (15) is mounted on the first pin (11a, 11b) by means of a pivot bearing (20) so as to be displaceable between a transport position pivoted into a second compartment region (6) and a functional position pivoted out of the compartment region (6), and a third implement (16) is mounted on the second pin (11a, 11b) by means of a pivot bearing (21) so as to be displaceable between a transport position pivoted into a third compartment region (7) and a functional position pivoted out of the compartment region (7), and a dividing wall (4a) is provided between the compartment regions (6, 7) which has locking tabs (50a, 50b) projecting out from its plane in opposite directions for locking and unlocking the implements (15, 16) respectively in their functional position.

## Revendications

1. Outil de poche (1) avec un boîtier (2), au moins une zone de réception (5, 6, 7), des axes (11a, 11b) ainsi qu'un briseur de vitre (55) logé sur l'un des axes (11a, 11b) avec une pointe de centrage (56), **caractérisé en ce que** le briseur de vitre (55) comprend un corps de base en forme de plaque (92), un dispositif de couplage (23), un ergot de verrouillage (93) et une partie de palier (94) et qui est disposé par le dispositif de couplage (23) d'une manière échangeable sur un des axes (11b), où le dispositif de couplage (23) est disposé sur un côté opposé à la pointe de centrage (56) et présente au moins une voie de coulisse (98, 99, 100) déplaçant le briseur de vitre (55) sur son mouvement de couplage selon un angle (78) inférieur à 30° à un axe longitudinal (68) du boîtier (2), et où le briseur de vitre (55), dans sa position de couplage, est logé sur l'axe (11a, 11b) contre un élément de ressort (63), et l'ergot de verrouillage (93) passe derrière une extrémité au côté frontal de l'élément de ressort (63), et l'axe (11b) vient en prise avec la partie de palier (94).

2. Outil de poche selon la revendication 1, **caractérisé en ce que** le dispositif de couplage (23) présente des bras de guidage (96, 97) et un évidement (95) réalisé entre ceux-ci pour la réception de l'axe (11a, 11b), où le premier bras de guidage (96) est pourvu sur le côté orienté vers le deuxième bras de guidage (97) de la première voie de coulisse (98).

3. Outil de poche selon la revendication 2, **caractérisé en ce que** le deuxième bras de guidage (97) est pourvu sur le côté orienté vers le premier bras de guidage (96) d'une deuxième voie de coulisse (99), et sur le côté éloigné du premier bras de guidage (96) d'une troisième voie de coulisse (100), ladite troisième voie de coulisse (100) réalisant une face de guidage s'étendant de manière convexe.

4. Outil de poche selon la revendication 1, **caractérisé en ce que** le boîtier (2) présente dans les zones d'extrémité opposées (9, 10) respectivement un axe (11a, 11b), et **en ce que** sont disposées une deuxième partie fonctionnelle (15) d'une manière ajustable par un palier pivotant (20) entre une position de transport rentrée par pivotement dans une deuxième zone de réception (6) et une position fonctionnelle sortie par pivotement de la zone de réception (6) sur le premier axe (11a, 11b), et une troisième partie fonctionnelle (16) d'une manière ajustable par un palier pivotant (21) entre une position de transport rentrée par pivotement dans une troisième zone de réception (7) et une position fonctionnelle sortie par pivotement de la zone de réception (7) sur le deuxième axe (11a, 11b), où entre les zones de réception (6, 7), une paroi de séparation (4a) est prévue qui réalise des languettes d'arrêt (50a, 50b) faisant saillie de son plan dans des directions opposées pour le verrouillage et le déverrouillage des parties fonctionnelles (15, 16) respectivement dans leur position fonctionnelle.
